# EUROPÄISCHE PATENTSCHRIFT

(11) **EP 2 156 242 B1**
(45) Veröffentlichungstag und Bekanntmachung des Hinweises auf die Patenterteilung: **01.12.2010**
(21) Anmeldenummer: 08826852.9
(22) Anmeldetag: 17.06.2008
(51) Int. Cl.: G03B 11/04, G02B 23/16, G02B 25/00

(54) **AUGENMUSCHEL**
EYE CUP
BONNETTE D'OCULAIRE

(30) Priorität: 20.06.2007 DE 102007028408
(43) Veröffentlichungstag der Anmeldung: 24.02.2010
(73) Patentinhaber: Steiner-Optik GmbH, 95448 Bayreuth (DE)
(72) Erfinder: STEINER, Carl, 95463 Bindlach (DE); FISCHBACH, Manfred, 95502 Himmelkron-Gössenreuth (DE)
(74) Vertreter: Hafner, Dieter
(86) Internationale Anmeldenummer: PCT/EP2008/004864
(87) Internationale Veröffentlichungsnummer: WO 2009/015730

(56) Entgegenhaltungen:
- EP-A- 1 286 197
- DE-A1- 2 808 099
- DE-B3- 10 358 404
- US-A1- 2001 055 163

## Beschreibung

Die Erfindung betrifft eine Augenmuschel für ein Okular eines optischen Beobachtungsgerätes, insbesondere für ein Fernglas.

Augenmuscheln stellen bei optischen Beobachtungsgeräten eine Verbindung zwischen dem Okular und dem Auge des Benutzers her. Bekannte Augenmuscheln weisen zum Schutz vor störendem seitlichen Lichteinfall einen Lichtschutzabschnitt auf, der den Zwischenraum zwischen dem Okular und dem Gesicht des Benutzers seitlich abdeckt. Eine derartige Augenmuschel ist beispielsweise aus der DE 20 2004 001 705 U1, DE2808099 A1, US2001055163 A1, EP1286197 A1 und DE10358404 B3 bekannt.

Weiterhin weisen bekannte Augenmuscheln einen Einstellmechanismus auf, der es ermöglicht, den Abstand zwischen der Austrittspupille des Okulars und dem Auge des Benutzers einzustellen. Das Einstellen des Abstandes erfolgt derart, dass Teile der Augenmuschel verdrehbar zueinander angeordnet sind, so dass bei einer Drehung des einen Teils der Abstand zu dem anderen Teil verändert wird. Nachteilig ist, dass beim Einstellen stets darauf zu achten ist, dass der Lichtschutzabschnitt seitlich angeordnet ist, was die Einstellmöglichkeiten und den Bedienungskomfort beträchtlich einschränkt.

Hiervon ausgehend liegt der Erfindung die Aufgabe zugrunde, eine Augenmuschel für ein Okular eines optischen Beobachtungsgerätes derart weiterzubilden, dass der Abstand zwischen dem Okular und einem Auge eines Benutzers individuell und komfortabel einstellbar ist.

Diese Aufgabe wird erfindungsgemäß gelöst durch eine Augenmuschel mit
a. einem Verbindungselement zum Verbinden der Augenmuschel mit dem Okular,
b. einem ersten Einstellelement zum Einstellen eines Abstandes entlang einer Längsachse zwischen dem Verbindungselement und dem ersten Einstellelement bei einer Drehung des ersten Einstellelements relativ zu dem Verbindungselement, und
c. einem zweiten Einstellelement,
   i. welches einen Druckabschnitt und einen Lichtschutzabschnitt aufweist,
   ii. welches derart ausgebildet ist, dass bei einer Druckkraft auf den Druckabschnitt unterhalb einer Druckkraftschwelle das zweite Einstellelement unabhängig von dem ersten Einstellelement drehbar ist, und
   iii. welches derart ausgebildet ist, dass bei einer Druckkraft auf den Druckabschnitt oberhalb einer Druckkraftschwelle das zweite Einstellelement zusammen mit dem ersten Einstellelement drehbar ist.

Dadurch, dass bei einer Druckkraft oberhalb einer Druckkraftschwelle das zweite Einstellelement zusammen mit dem ersten Einstellelement drehbar ist, kann in einfacher Weise der Abstand zwischen dem Verbindungselement und dem ersten Einstellelement eingestellt werden und somit der Abstand zwischen dem Okular und dem Auge des Benutzers angepasst werden. Sobald ein gewünschter Abstand eingestellt ist, kann mit einer reduzierten Druckkraft unterhalb einer Druckkraftschwelle das zweite Einstellelement mit dem Lichtschutzabschnitt unabhängig von dem ersten Einstellelement gedreht und der Lichtschutzabschnitt seitlich positioniert werden. Somit kann die erfindungsgemäße Augenmuschel auf einen beliebigen Abstand zwischen dem Okular und einem Auge des Beobachters eingestellt werden, wobei bei jedem beliebigen Abstand der Lichtschutzabschnitt seitlich positionierbar ist. Die Einstellmöglichkeiten und der Bedienungskomfort werden dadurch deutlich gesteigert.

Vorteilhafterweise weist der Druckabschnitt an einer Innenwand mindestens eine Erhöhung auf. Eine derartige Erhöhung verbessert die Übertragung von Druckkräften von dem Druckabschnitt auf das zweite Einstellelement.

Günstigerweise sind mehrere Erhöhungen vorgesehen, die entlang der Innenwand gleichmäßig beabstandet angeordnet sind. Eine derartige Anordnung von mehreren Erhöhungen ermöglicht ein Ausüben der Druckkraft an einer beliebigen Stelle des Druckabschnitts.

Weiterhin ist mit Vorteil vorgesehen, dass die mindestens eine Erhöhung einteilig mit dem Druckabschnitt ausgebildet ist. Eine derartige Ausbildung ermöglicht eine kostengünstige Herstellung der Augenmuschel.

Günstigerweise besteht die mindestens eine Erhöhung aus Silikon. Silikon ermöglicht aufgrund seiner Elastizität eine gleichmäßige Übertragung von Druckkräften auf das zweite Einstellelement, wobei Silikon gleichzeitig einen ausreichenden Reibschluss ermöglicht.

Vorteilhafterweise ist zum Befestigen des zweiten Einstellelements entlang der Längsachse an dem ersten Einstellelement ein Befestigungselement vorgesehen. Ein derartiges Befestigungselement ermöglicht eine einfache und sichere Befestigung des zweiten Einstellelements an dem ersten Einstellelement, wobei das zweite Einstellelement relativ zu dem ersten Einstellelement drehbar bleibt. Das Befestigungselement und das zweite Einstellelement sind formschlüssig miteinander verbunden. Das zweite Einstellelement ist somit nur zusammen mit dem Befestigungselement relativ zu dem ersten Einstellelement verdrehbar.

Günstigerweise weist das Befestigungselement mindestens eine Durchbrechung auf, durch welche sich die mindestens eine Erhöhung zumindest teilweise erstreckt. Durch eine derartige Ausbildung des Befestigungselements ist eine einfache Übertragung von Druckkräften mittels der mindestens einen Erhöhung in Verbindung mit dem Befestigungselement möglich.

Mit Vorteil ist weiterhin vorgesehen, dass das Befestigungselement zum Verbinden mit dem ersten Einstellelement mindestens einen Rastabschnitt aufweist. Ein derartiger Rastabschnitt ermöglicht ein einfaches Verbinden.

Günstigerweise ist das erste Einstellelement mit dem Verbindungselement verrastbar. Eine derartige Ausbildung ermöglicht eine Arretierung des ersten Einstellelements relativ zu dem Verbindungselement.

Günstigerweise weist das Befestigungselement einen Ringabschnitt mit einem angeformten Ringbund auf, wobei der Ringbund sich ausgehend von einer Befestigungselement-Innenwand in Richtung des ersten Einstellelements erstreckt und gegen einen Vorsprung des ersten Einstellelements anliegt. Ein derartiger Ringbund sichert das Befestigungselement auf dem ersten Einstellelement und ermöglicht gleichzeitig ein einfaches Verdrehen des Befestigungselements relativ zu dem ersten Einstellelement.

Vorteilhafterweise sind in dem Ringabschnitt mehrere Durchbrechungen mittig und gleichmäßig voneinander beabstandet angeordnet. Eine derartige Anordnung von mehreren Durchbrechungen ermöglicht eine über den

Umfang gleichmäßige Kraftübertragung von dem zweiten Einstellelement auf das erste Einstellelement.

Weiterhin ist mit Vorteil vorgesehen, dass in dem Ringabschnitt mehrere Rastabschnitte gegenüberliegend zu dem Ringbund ausgebildet sind. Eine derartige Anordnung von Rastabschnitten sichert das Befestigungselement an dem ersten Einstellelement und ermöglicht gleichzeitig ein einfaches Verdrehen des Befestigungselements relativ zu dem ersten Einstellelement.

Günstigerweise liegen die Rastabschnitte mit jeweils einem Rasthaken gegen einen Vorsprung des ersten Einstellelements an. Eine derartige Ausbildung ermöglicht ein Verdrehen des Befestigungselements relativ zu dem ersten Einstellelement mit einem geringen Kraftaufwand, da der Reibwiderstand gering ist.

Vorteilhafterweise ist das Befestigungselement als Gleitring ausgebildet. Durch eine derartige Ausbildung wird ein geringer Reibwiderstand zwischen dem ersten Einstellelement und dem Befestigungselement ermöglicht. Insbesondere besteht der Gleitring aus einem Material, das beim Gleiten auf dem Material des ersten Einstellelements einen geringen Reibwiderstand aufweist. Vorteilhafterweise besteht der Gleitring aus einem Kunststoff, der auf dem Material des ersten Einstellelements gleitfähig ist.

Weiterhin ist mit Vorteil vorgesehen, dass das Befestigungselement aus einem härteren Material als das zweite Einstellelement besteht. Durch eine derartige Ausbildung kann die Kraftübertragung von dem zweiten Einstellelement auf das erste Einstellelement sicher erfolgen und fein dosiert werden. Vorteilhafterweise besteht das Befestigungselement aus Kunststoff, wohingegen das zweite Einstellelement aus einem elastischen Material, wie beispielsweise aus Gummi oder Silikon besteht. Besonders vorteilhaft ist, wenn das Befestigungselement als Gleitring ausgebildet ist.

Nachfolgend wird die Erfindung anhand eines bevorzugten Ausführungsbeispiels in Verbindung mit der Zeichnung näher beschrieben. Es zeigen:
- Fig. 1: einen Axialschnitt durch eine Augenmuschel in einer ersten Ein- stellposition,
- Fig. 2: einen Axialschnitt durch die Augenmuschel gemäß Fig. 1 in einer zweiten Einstellposition,
- Fig. 3: einen Querschnitt durch die Augenmuschel gemäß Fig. 1,
- Fig. 4: einen Axialschnitt durch ein zweites Einstellelement und ein Be- festigungselement der Augenmuschel gemäß Fig. 1, und
- Fig. 5: eine Seitenansicht eines Verbindungselements und eines ersten Einstellelements der Augenmuschel gemäß Fig. 1.

Eine Augenmuschel 1 für ein Okular eines optischen Beobachtungsgerätes weist ein Verbindungselement 2, ein erstes Einstellelement 3, ein Befestigungselement 4 und ein zweites Einstellelement 5 auf. Bei dem optischen Beobachtungsgerät kann es sich beispielsweise um ein Fernglas, ein Mikroskop oder ein Fernrohr handeln.

Das Verbindungselement 2 ist in Form einer Hülse ausgebildet und weist zum Verbinden der Augenmuschel 1 mit dem nicht dargestellten Okular einen Verbindungsabschnitt 6 auf, der fest mit dem Okular verbindbar ist.

Das Verbindungselement 2 weist eine Längsachse 7 auf, die mit einer optischen Achse des Okulars zusammenfällt. An einer Verbindungselement-Außenwand 8 sind zwei Führungszapfen 9 angeordnet, die einander gegenüber liegen.

Die Führungszapfen 9 sind in Führungsnuten 10 angeordnet, die in dem ersten Einstellelement 3 ausgebildet sind und in Richtung einer ersten Einstellelement-Innenwand 11 offen sind. Die Führungsnuten 10 verlaufen in Form einer Teilschraubenbahn. An einer ersten Einstellelement-Außenwand 12 weist das erste Einstellelement 3 einen mittig umlaufenden Vorsprung 13 auf. Das erste Einstellelement 3 ist entsprechend dem Verbindungselement 2 in Form einer Hülse ausgebildet und umgibt dieses.

Dadurch, dass die Führungszapfen 9 in den Führungsnuten 10 angeordnet sind, ist das erste Einstellelement 3 relativ zu dem Verbindungselement 2 drehbar, wobei bei einer Drehung des ersten Einstellelements 3 in einer Drehrichtung 14 das erste Einstellelement 3 relativ zu dem Verbindungselement 2 entlang der Längsachse 7 einen Abstand A ausbildet. Der Abstand A ist in Abhängigkeit von der Drehung einstellbar. Zum Arretieren des ersten Einstellelements 3 relativ zu dem Verbindungselement 2 weist dieses eine Rastöffnung 15 auf, in der eine Rastzunge 16 mit einer schräg angeordneten Rastnase 17 angeordnet ist. Die Rastnase 17 wirkt mit mehreren parallel verlaufenden und beabstandeten Rastnuten 18 zusammen, die in einem Rastbereich 19 an der ersten Einstellelement-Innenwand 11 angeordnet sind.

Das Befestigungselement 4 ist zwischen dem ersten Einstellelement 3 und dem zweiten Einstellelement 5 angeordnet und befestigt das zweite Einstellelement 5 relativ zu dem ersten Einstellelement 3 entlang der Längsachse 7. Das Befestigungselement 4 weist einen Ringabschnitt 20 auf, an den ein Ringbund 21 angeformt ist. Der Ringbund 21 erstreckt sich ausgehend von einer Befestigungselement-Innenwand 22 in Richtung des ersten Einstellelements 3, wobei der Ringbund 21 gegen den Vorsprung 13 und die erste Einstellelement-Außenwand 12 anliegt. In dem Ringabschnitt 20 sind vier ovale Durchbrechungen 23 mittig und gleichmäßig voneinander beabstandet angeordnet, wobei sich die Durchbrechungen 23 ausgehend von der Befestigungselement-Innenwand 22 bis zu einer Befestigungselement-Außenwand 24 erstrecken. Gegenüberliegend zu dem Ringbund 21 sind in dem Ringabschnitt 20 mehrere Rastabschnitte 25 ausgebildet, die jeweils mit einem Rasthaken 26 gegen den Vorsprung 13 und die erste Einstellelement-Außenwand 12 anliegen.

Das zweite Einstellelement 5 ist formschlüssig mit dem Befestigungselement 4 verbunden und umgibt dieses im Wesentlichen vollständig. Das zweite Einstellelement 5 weist einen ringförmigen Druckabschnitt 27 auf, an den ein Lichtschutzabschnitt 28 und ein Anlageabschnitt 29 angeformt ist. Der Lichtschutzabschnitt 28 erstreckt sich im Wesentlichen über einen Umfang von 180° und verläuft ausgehend von dem Druckabschnitt 27 in Richtung der Längsachse 7 spitz zu. Der Anlageabschnitt 29 ist im Wesentlichen ringförmig ausgebildet und weist einen Querschnitt in Form eines Halbkreises auf. Der Anlageabschnitt 29 ist im Bereich des Lichtschutzabschnittes 28 an dessen Innenseite angeordnet. Gegenüberliegend zu dem Anlageabschnitt 29 ist an den Druckabschnitt 27 ein Ringbundabschnitt 30 angeformt, der sich radial in Richtung des ersten Einstellelements 3 erstreckt und den Ringabschnitt 20 des Befestigungselements 4 umgibt. An einer Innenwand 31 des Druckabschnitts 27 ist eine zu der Anzahl der Durchbrechungen 23 entsprechende Anzahl an Erhöhungen 32 ausgebildet, die sich ausgehend von der Innenwand 31 radial in Richtung des ersten Einstellelements 3 erstrecken. Die Erhöhungen 32 sind einteilig mit dem Druckabschnitt 27 ausgebildet und entsprechen in ihrer Form und Anordnung der Form und Anordnung der Durchbrechungen 23. Die Erhöhungen 32 erstrecken sich durch die Durchbrechungen 23 und weisen in radialer Richtung eine Höhe H derart auf, dass bei einer radialen Druckkraft F auf den Druckabschnitt 27 unterhalb einer Druckkraftschwelle F_{D} das zweite Einstellelement 5 unabhängig von dem ersten Einstellelement 3 drehbar ist und, dass bei einer Druckkraft F auf den Druckabschnitt 27 oberhalb einer Druckkraftschwelle F_{D} das zweite Einstellelement 5 nur zusammen mit dem ersten Einstellelement 3 drehbar ist.

Das Befestigungselement 4 ist als Gleitring ausgebildet und besteht aus einem Material, das auf dem Material des ersten Einstellelements 3 gleitfähig ist. Darüber hinaus weist das Material des Befestigungselements 4 eine im Vergleich zu dem Material des zweiten Einstellelements 5 größere Härte auf. Vorteilhafterweise besteht das erste Einstellelement 3 und das Befestigungselement 4 aus Kunststoff und das zweite Einstellelement 5 aus einem elastischen Material, wie beispielsweise Gummi oder Silikon.

Der Druckabschnitt 27, der Lichtschutzabschnitt 28, der Anlageabschnitt 29, der Ringbundabschnitt 30 und die Erhöhungen 32 sind vorteilhafterweise einteilig aus Silikon hergestellt.

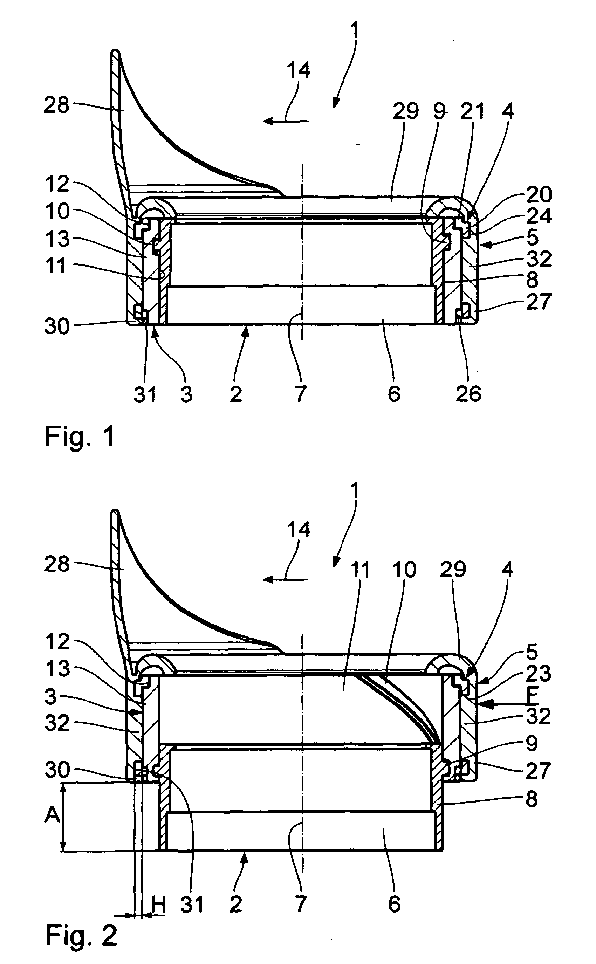

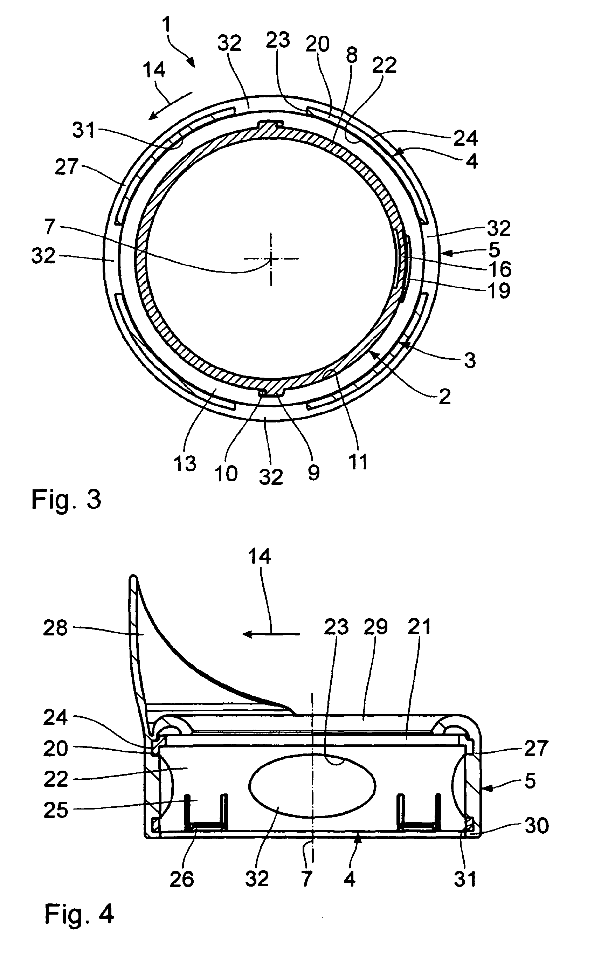

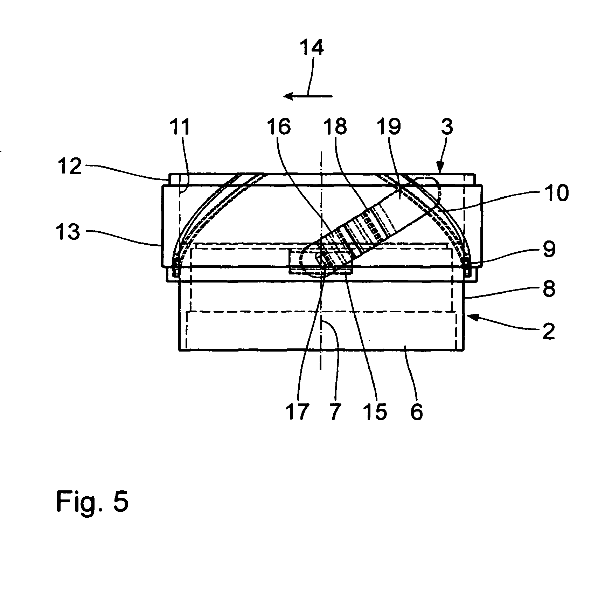

Nachfolgend wird unter Bezugnahme auf die Fig. 1 bis 5 die Funktion der erfindungsgemäßen Augenmuschel 1 beschrieben. Fig. 1 zeigt die Augenmuschel 1 in einer ersten Einstellposition, in der der Abstand A zwischen dem ersten Einstellelement 3 und dem zweiten Einstellelement 5 gleich Null ist. Zum Einstellen des Abstandes A muss ein Benutzer zunächst eine radiale Druckkraft F oberhalb einer Druckkraftschwelle F_{D} auf den Druckabschnitt 27 ausüben, so dass die Erhöhungen 32 gegen den Vorsprung 13 gepresst werden. Bei einer anschließenden Drehung des zweiten Einstellelements 5 um die Längsachse 7 in Drehrichtung 14 wird das erste Einstellelement 3 aufgrund des Reibschlusses zwischen den Erhöhungen 32 und dem Vorsprung 13 mitgenommen. Das erste Einstellelement 3 wird somit schlupffrei zusammen mit dem zweiten Einstellelement 5 in Drehrichtung 14 gedreht. Durch diese Drehung wird das erste Einstellelement 3 relativ zu dem Verbindungselement 2 gedreht, so dass sich die Führungszapfen 9 entlang der Führungsnuten 10 bewegen und der Abstand A vergrößert wird. Prinzipiell ist ein beliebiger Abstand A einstellbar. Vorteilhaft ist es jedoch, wenn das Einstellen des Abstandes A derart erfolgt, dass die Rastnase 17 in einer der Rastnuten 18 zu liegen kommt, da dadurch ein höherer Widerstand gegen eine ungewollte Verdrehung und somit eine Arretierung erzielt wird. Fig. 2 zeigt die Augenmuschel 1 in einer zweiten Einstellposition, in der der Abstand A maximal ist. Durch die beschriebene Drehung des ersten und zweiten Einstellelements 3, 5 ist somit ein beliebiger Abstand zwischen dem Okular und dem Auge des Benutzers einstellbar.

Um bei einem beliebigen Abstand A den Lichtschutzabschnitt 28 seitlich anzuordnen, muss der Benutzer die radiale Druckkraft F auf den Druckabschnitt 27 unter die Druckkraftschwelle F_{D} reduzieren. Bei einer derart reduzierten Druckkraft F liegen die Erhöhungen 32 im Wesentlichen nicht gegen den Vorsprung 13 an, so dass das zweite Einstellelement 5 zusammen mit dem Befestigungselement 4 unabhängig von dem ersten Einstellelement 3 um die Längsachse 7 drehbar ist. Der Reibwiderstand zwischen dem Befestigungselement 4 und dem zweiten Einstellelement 5 gegenüber dem ersten Einstellelement 3 ist wesentlich kleiner als der Reibwiderstand zwischen dem ersten Einstellelement 3 und dem Verbindungselement 2, so dass das zweite Einstellelement 5 unabhängig von dem ersten Einstellelement 3 drehbar ist. Der Lichtschutzabschnitt 28 kann somit an eine beliebige Position gedreht werden, ohne dass dadurch der Abstand A verändert wird. Wird anschließend keine Druckkraft F mehr auf den Druckabschnitt 27 ausgeübt, so ist der Reibwiderstand des Befestigungselements 4 und des zweiten Einstellelements 5 gegenüber dem ersten Einstellelement 3 dennoch groß genug, um ein selbsttätiges Verdrehen des zweiten Einstellelements 5 zu verhindern.

Die erfindungsgemäße Augenmuschel 1 ist somit aufgrund der Vielzahl von Einstellmöglichkeiten individuell auf die Bedürfnisse des Benutzers, insbesondere auch von Brillenträgern, einstellbar. Dadurch, dass das erste Einstellelement 3 in Abhängigkeit von einer Druckkraft auf das zweite Einstellelement 5 mitgenommen wird oder nicht, ist die Einstellung der Augenmuschel 1 für den Benutzer einfach und sehr komfortabel.

## Patentansprüche

1. Augenmuschel für ein Okular eines optischen Beobachtungsgerätes mit
a. einem Verbindungselement (2) zum Verbinden der Augenmuschel (1) mit dem Okular,
b. einem ersten Einstellelement (3) zum Einstellen eines Abstandes (A) entlang einer Längsachse (7) zwischen dem Verbindungselement (2) und dem ersten Einstellelement (3) bei einer Drehung des ersten Einstellelements (3) relativ zu dem Verbindungselement (2), und
c. einem zweiten Einstellelement (5),
welches einen Druckabschnitt (27) und einen Lichtschutzabschnitt (28) aufweist,
**dadurch gekennzeichnet, dass** bei einer Druckkraft (F) auf den Druckabschnitt (27) unterhalb einer Druckkraftschwelle (F_{D}) das zweite Einstellelement (5) unabhängig von dem ersten Einstellelement (3) drehbar ist, und
welches derart ausgebildet ist, dass bei einer Druckkraft (F) auf den Druckabschnitt (27) oberhalb einer Druckkraftschwelle (F_{D}) das zweite Einstellelement (5) zusammen mit dem ersten Einstellelement (3) drehbar ist.

2. Augenmuschel nach Anspruch 1, **dadurch gekennzeichnet, dass** der Druckabschnitt (27) an einer Innenwand (31) mindestens eine Erhöhung (32) aufweist.

3. Augenmuschel nach Anspruch 2, **dadurch gekennzeichnet, dass** mehrere Erhöhungen (32) vorgesehen sind, die entlang der Innenwand (31) gleichmäßig beabstandet angeordnet sind.

4. Augenmuschel nach Anspruch 2 oder 3, **dadurch gekennzeichnet, dass** die mindestens eine Erhöhung (32) einteilig mit dem Druckabschnitt (27) ausgebildet ist.

5. Augenmuschel nach einem der Ansprüche 1 bis 4, **dadurch gekennzeichnet, dass** die mindestens eine Erhöhung (32) aus Silikon besteht.

6. Augenmuschel nach einem der Ansprüche 1 bis 5, **dadurch gekennzeichnet, dass** zum Befestigen des zweiten Einstellelements (5) entlang der Längsachse (7) an dem ersten Einstellelement (3) ein Befestigungselement (4) vorgesehen ist.

7. Augenmuschel nach Anspruch 6, **dadurch gekennzeichnet, dass** das Befestigungselement (4) mindestens eine Durchbrechung (23) aufweist, durch welche sich die mindestens eine Erhöhung (32) zumindest teilweise erstreckt.

8. Augenmuschel nach einem der Ansprüche 6 oder 7, **dadurch gekennzeichnet, dass** das Befestigungselement (4) zum Verbinden mit dem ersten Einstellelement (3) mindestens einen Rastabschnitt (25) aufweist.

9. Augenmuschel nach einem der Ansprüche 1 bis 8, **dadurch gekennzeichnet, dass** das erste Einstellelement (3) mit dem Verbindungselement (2) verrastbar ist.

10. Augenmuschel nach einem der Ansprüche 6 bis 9, **dadurch gekennzeichnet, dass** das Befestigungselement (4) einen Ringabschnitt (20) mit einem angeformten Ringbund (21) aufweist, wobei der Ringbund (21) sich ausgehend von einer Befestigungselement-Innenwand (22) in Richtung des ersten Einstellelements (3) erstreckt und gegen einen Vorsprung (13 des ersten Einstellelements (3) anliegt.

11. Augenmuschel nach Anspruch 10, **dadurch gekennzeichnet, dass** in dem Ringabschnitt (20) mehrere Durchbrechungen (23) mittig und gleichmäßig voneinander beabstandet angeordnet sind.

12. Augenmuschel nach Anspruch 10 oder 11, **dadurch gekennzeichnet, dass** in dem Ringabschnitt (20) mehrere Rastabschnitte (25) gegenüberliegend zu dem Ringbund (21) ausgebildet sind.

13. Augenmuschel nach Anspruch 12, **dadurch gekennzeichnet, dass** die Rastabschnitte (25) mit jeweils einem Rasthaken (26) gegen den Vorsprung (13) des ersten Einstellelements (3) anliegen.

14. Augenmuschel nach einem der Ansprüche 6 bis 13, **dadurch gekennzeichnet, dass** das Befestigungselement (4) als Gleitring ausgebildet ist.

15. Augenmuschel nach einem der Ansprüche 6 bis 14, **dadurch gekennzeichnet, dass** das Befestigungselement (4) aus einem härteren Material als das zweite Einstellelement (5) besteht.

## Claims

1. An eye cup for an eyepiece of an optical observation apparatus having
a. a connecting element (2) for connecting the eye cup (1) to the eyepiece,
b. a first adjusting element (3) for adjusting a distance (A) along an longitudinal axis (7) between the connecting element (2) and the first adjusting element (3) during a rotation of the first adjusting element (3) relative to the connecting element (2), and
c. a second adjusting element (5) having a pressure section (27) and a light-shield section (28),
**characterized in that**
at a compressive force (F) on the pressure section (27) below a compressive force threshold (F_{D}) the second adjusting element (5) is rotatable independently from the first adjusting element (3) and being designed such that, at a compressive force (F) on the pressure section (27) above a compressive force threshold (F_{D}), the second adjusting element (5) is rotatable together with the first adjusting element (3).

2. Eye cup according to claim 1,
**characterized in that**
the pressure section (27) has at least one raised area (32) provided on an inner wall (31).

3. Eye cup according to claim 2,
**characterized in that**
a plurality of raised areas (32) are provided that are arranged equidistantly along the inner wall (31).

4. Eye cup according to claim 2 or 3,
**characterized in that**
the at least one raised area (32) is designed as one piece with the pressure section (27).

5. Eye cup according to one of the claims 1 to 4,
**characterized in that**
the at least one raised area (32) is made of silicone.

6. Eye cup according to one of the claims 1 to 5,
**characterized in that**
a fastening element (4) for fastening the second adjusting element (5) along the longitudinal axis (7) is provided on the first adjusting element (3).

7. Eye cup according to claim 6,
**characterized In that**
the fastening element (4) has at least one opening (23) through which the at least one raised area (32) extends by at least a portion thereof.

8. Eye cup according to one of the claims 6 or 7,
**characterized in that**
the fastening element (4) has, for fastening same to the first adjusting element (3) at least one detent locking section (25).

9. Eye cup according to one of the claims 1 to 8,
**characterized in that**
the first adjusting element (3) can be interlocked with the connecting element (2).

10. Eye cup according to one of the claims 6 to 9,
**characterized in that** the fastening element (4) has an annular section (20) incorporating an integral annular collar (21), wherein the annular collar (21) extends, starting from a fastening element inner wall (22) toward the first adjusting element (3) and rests against a projection (13) of the first adjusting element (3).

11. Eye cup according to claim 10,
**characterized in that**
a plurality of openings (23) are arranged centrally and equidistantly in the annular section (20).

12. Eye cup according to claim 10 or 11,
**characterized in that**
in the annular section (20) a plurality of detent locking sections (25) are formed opposite the annular collar (21).

13. Eye cup according to claim 12,
**characterized in that**
the detent locking sections (25) rest with one detent locking hook (26) in each case against the projection (13) of the first adjusting element (3).

14. Eye cup according to one of the claims 6 to 13,
**characterized in that**
the fastening element (4) is designed in the form of a sliding ring.

15. Eye cup according to one of the claims 6 to 14,
**characterized in that**
the fastening element (4) is made of a harder material than the second adjusting element (5).

## Revendications

1. Oeilleton pour un oculaire d'un appareil d'observation optique, comprenant :
a. un élément de liaison (2) servant à relier l'oeilleton (1) à l'oculaire,
b. un premier élément de réglage (3) servant à régler une distance (A) le long d'un axe longitudinal (7) entre l'élément de liaison (2) et le premier élément de réglage (3) par une rotation du premier élément de réglage (3) par rapport à l'élément de liaison (2), et
c. un second élément de réglage (5),
lequel présente une portion de pression (27) et une portion de protection contre la lumière (28),
**caractérisé en ce que** dans le cas d'un effort de pression (F) inférieur à un seuil d'effort de pression (F_{D}) sur la portion de pression (27), le second élément de réglage (5) peut tourner indépendamment du premier élément de réglage (3), et
lequel est conçu de façon que, dans le cas d'un effort de pression (F) supérieur à un seuil d'effort de pression (F_{D}) sur la portion de pression (27), le second élément de réglage (5) puisse tourner conjointement avec le premier élément de réglage (3).

2. Oeilleton selon la revendication 1, **caractérisé en ce que** la portion de pression (27) présente au moins une élévation (32) sur une paroi intérieure (31).

3. OEilleton selon la revendication 2, **caractérisé en ce qu'**il est prévu plusieurs élévations (32) qui sont disposées de manière régulièrement espacée le long de la paroi intérieure (31).

4. OEilleton selon la revendication 2 ou 3, **caractérisé en ce que** ladite au moins une élévation (32) est formée d'une seule pièce avec la portion de pression (27).

5. Oeilleton selon une des revendications 1 à 4, **caractérisé en ce que** ladite au moins une élévation (32) est en silicone.

6. Oeilleton selon une des revendications 1 à 5, **caractérisé en ce que** pour la fixation du second élément de réglage (5) le long de l'axe longitudinal (7), il est prévu un élément de fixation (4) sur le premier élément de réglage (3).

7. Oeilteton selon la revendication 6, **caractérisé en ce que** l'élément de fixation (4) présente au moins une ouverture (32) à travers laquelle ladite au moins une élévation (32), s'étend au moins partiellement.

8. Oeilleton selon une des revendications 6 ou 7, **caractérisé en ce que** l'élément de fixation (4) présente au moins une portion d'encliquetage (25) pour la liaison avec le premier élément de réglage (3).

9. Oeilleton selon une des revendications 1 à 8, **caractérisé en ce que** le premier élément de réglage (3) peut être encliqueté avec l'élément de liaison (2).

10. Oeilleton selon une des revendications 6 à 9, **caractérisé en ce que** l'élément de fixation (4) présente une portion annulaire (20) avec une collerette annulaire (21) formée sur elle, la collerette annulaire (21) s'étendant depuis une paroi intérieure (22) de l'élément de fixation en direction du premier élément de réglage (3) et étant en appui contre une saillie (13) du premier élément de réglage (3).

11. Oeilleton selon la revendication 10, **caractérisé en ce que** plusieurs ouvertures (23) sont disposées centralement et de manière régulièrement espacée les unes des autres dans la portion annulaire (20).

12. Oeilleton selon la revendication 10 ou 11, **caractérisé en ce que** plusieurs portions d'encliquetage (25) sont disposées en face de la collerette annulaire (21) dans la portion annulaire (20).

13. Oeilleton selon la revendication 12, **caractérisé en ce que** les portions d'encliquetage (25) sont en appui contre la saillie (13) du premier élément de réglage (3) par chaque fois un crochet d'encliquetage (26).

14. Oeilleton selon une des revendications 6 à 13, **caractérisé en ce que** l'élément de fixation (4) est réalisé sous la forme d'un anneau coulissant.

15. Oeilleton selon une, des revendications 6 à 14, **caractérisé en ce que** l'élément de fixation (4) est réalisé dans un matériau plus dur que le second élément de réglage (5).
